# EUROPEAN PATENT SPECIFICATION

(11) **EP 0 544 892 B1**
(45) Date of publication and mention of the grant of the patent: **12.03.1997**
(21) Application number: 92914090.3
(22) Date of filing: 16.06.1992
(51) Int. Cl.: B01D 53/26, B01D 53/28

(54) **USE OF CRYSTALLINE MOLECULAR SIEVES CONTAINING CHARGED OCTAHEDRAL SITES IN CYCLIC DESICCATING PROCESSES**
VERWENDUNG VON KRISTALLINEN MOLEKULARSIEBEN, WELCHE GELADENE ACHTSEITIGE LAGEN ENTHALTEN, IN ZYKLISCHEN TROCKENPROZESSEN
UTILISATION DE TAMIS MOLECULAIRES CRISTALLINS CONTENANT DES SITES OCTAEDRIQUES CHARGES DANS DES TECHNIQUES DE DESSICCATION CYCLIQUE

(30) Priority: 21.06.1991 US 718895; 20.05.1992 US 886673
(43) Date of publication of application: 09.06.1993
(73) Proprietor: ENGELHARD CORPORATION, Iselin, New Jersey 08830-0770 (US)
(72) Inventor: KUZNICKI, Steven, M., Easton, PA 18042 (US); THRUSH, Kathleen, A., Easton, PA 18042 (US); GARFINKEL, Harmon, M., Bridgewater, NJ 08807 (US)
(74) Representative: Geering, Keith Edwin
(86) International application number: US9205178
(87) International publication number: WO9300152

(56) References cited:
- US-A- 4 853 202
- US-A- 4 938 939

## Description

### FIELD OF INVENTION

This invention relates to the use of unique inorganic molecular sieves of the type containing octahedrally coordinated metal sites, such as octahedrally coordinated titanium, in cyclic processes for removing water from gases such as adsorptive drying, pressure swing drying, dehumidification, adsorptive heat pumps and desiccant cooling. The invention is especially directed to such processes in which water molecules are absorbed from a gas stream at ambient temperature or temperatures slightly above ambient temperature and are desorbed at relatively low temperature, e.g., 50 to 100°C.

### BACKGROUND OF THE INVENTION

Desiccants are employed in a wide variety of applications ranging from drying of bulk industrial gas streams to climate control by dehumidification, and adsorptive cooling or heating such as in various heat pump and desiccant cooling schemes.

Nearly all commercial desiccation processes are cyclic as presently practiced and involve an adsorption stage wherein water or moisture is adsorbed from a gas stream, followed by desorption of the adsorbed water to regenerate the adsorbent, which is then recycled into contact with an incoming gas stream for renewed adsorption of water. A drawback to many of these cyclic processes is that regeneration requires costly high temperatures when highly efficient drying is needed. This also precludes the utilization of high efficiency but low temperature heat sources, such as the exhaust from a classical electrically driven heat pump, or sources of low temperature waste heat. These limitations are dictated by the characteristics of presently available adsorbents. Other desiccation schemes are not amenable to cyclic adsorption and desorption for reasons also imposed by inherent deficiencies of presently available desiccants in either or both the adsorption and desorption stages.

Such processes are well known in the art and are described in numerous technical publications and patents. Typical of such, herein incorporated by reference, are U. S. patents 4,701,189; 3,844,737; 4,134,743; 4,197,095; 4,247,311; 4,783,201, 4,070,164, as well as D. W. Breck, Zeolite Molecular Sieves, John Wiley & Sons, Inc., Chapter 8, particularly pages 716-717.

By way of explanation, presently available adsorptive desiccants are of two general types, namely, classical crystalline zeolitic molecular sieves, such as zeolites Chabazite, A and X and amorphous (noncrystalline) inorganic metal oxides or metal silicates, such as silica gel or certain alumina gels or certain porous forms of carbon. Classical molecular sieves strongly bind water by electrostatic interaction with water and the cations inherent to most zeolite structures. Cations are present to counterbalance the negatively charged tetrahedral aluminum sites present in classical zeolites. Gels and carbons are believed to adsorb water by mild complexation with hydroxyl groups inherent to their surfaces.

Both the classical sieves and the amorphous gels and carbons demonstrate key deficiencies and the choice of which to employ is dictated by the cost of overcoming their limitations in a particular process. Classical molecular sieves are more efficient in the adsorption stage, as reflected by the fact that they exhibit Brunauer Type I extreme adsorption towards water. This "active" adsorption of water is a direct consequence of the extremely exothermic interaction between water and the active sites of the zeolite, i.e. the cations associated with the tetrahedral aluminum sites of the framework. As a consequence, classical molecular sieve type adsorbents can adsorb a substantial quantity of water molecules from a gas stream at low partial pressure, even at a fraction of a torr. This facilitates the essentially complete desiccation of large volumes of gas by a relatively small bed of zeolite molecular sieve adsorbent. These highly active, extreme Type I isotherm adsorbents are therefore the desiccant of choice when extremely dry gas is required. Because they bind water molecules so tightly, the performance of active, extreme Type I isotherm zeolitic sieves inherently leaves much to be desired when the adsorbent must be regenerated. Generally, classical molecular sieves must be heated to temperatures as high as 200 - 300°C either under vacuum or a flow of dry gas to be thoroughly redried and reactivated. It is both time consuming and costly to regenerate the adsorbent under the severe conditions necessitated by the strong water binding properties of classical zeolitic molecular sieves. Additionally, heat sources which can be employed are limited to only those of relatively high temperature.

On the other hand, amorphous adsorbents such as silica gel exhibit generally linear adsorption isotherms, i.e. the amount of water adsorbed is linearly proportional to the partial pressure of water available at some given temperature. This limits such material's water capacity and volume of gas which can be dried at low partial pressures of water. However, with relatively low binding energy, such materials release water at temperatures much lower than needed for classical zeolite molecular sieves, a high degree of dryness often being reached by 100°C. Thus such materials tend to be employed only for gas streams containing large amounts of water which do not need to be thoroughly dried.

It would be advantageous in many desiccation processes to be able to utilize a material which is capable of substantial drying a gas stream, even at relatively low water concentrations such as is associated with classical molecular sieve zeolites, but which then could be reactivated under the relatively mild conditions associated with the amorphous gel type desiccants. Such a desiccant material would demonstrate "zeolite-like" adsorption towards water, but at lower binding energies than classical zeolites. Most desirable would be a material which would demonstrate "zeolite" adsorption near ambient temperature, but whose isotherm towards water would collapse to that resembling a non-specific gel at mildly elevated temperatures. Conceptually, such a material might result from at least three approaches: weakening the specific adsorption sites of a classical zeolite, instilling more active sites in an amorphous-type material or generating new materials with weak, but specific adsorption sites.

### BRIEF DESCRIPTION OF THE DRAWINGS

Fig. 1 are water adsorption isotherms on chabazite at various temperatures and pressures.

Fig. 2 are water adsorption isotherms on ETS-4 at various temperatures and pressures.

Fig. 3 are water adsorption isotherms on as-synthesized ETS-10 at various temperatures and pressures.

Fig. 4 are water adsorption isotherms on ETAS-10 at various temperatures and pressures.

Fig. 5 are water adsorption isotherms on partial hydrogen exchanged ETS-10 at various temperatures and pressures.

Fig. 6 are water adsorption isotherms on calcium exchanged ETS-10 at various temperatures and pressures.

Fig. 7 are water adsorption isotherms on commercially available Zeolite A.

Fig. 8 are water adsorption isotherms on commercially available Zeolite X.

### SUMMARY OF THE INVENTION

During exhaustive physical, chemical and structural characterization of a family of unique octahedrally coordinated synthetic crystalline molecular sieves, it was observed that these molecular sieves, unlike classical (tetrahedrally coordinated) zeolite molecular sieves, manifest zeolite-like adsorption isotherms towards water at ambient temperature which rapidly collapse to isotherms resembling amorphous materials with only modest increases in temperature, whereby they are capable of potentially combining the desirable characteristics of classical zeolitic molecular sieves and amorphous type desiccants while minimizing the deficiencies of each.

The present invention comprises a cyclic regenerative process for drying a gas, especially air, by exposure of said gas to a desiccant material composed of a molecular sieve with octahedral active sites. In the preferred embodiment, the process of the invention comprises adsorbing moisture at ambient temperature or substantially ambient temperature, e.g., 10°C to 40°C, from a gas stream, especially air, and desorbing the adsorbed water at a temperature in the range of about 50°C to 100°C, preferably about 82°C or less.

The unique three-dimensional framework molecular sieves used in practice of the invention, hereinafter referred to as "EXS" molecular sieves, are distinguished from other molecular sieves by possessing octahedrally coordinated active sites in the crystalline structure. These molecular sieves contain electrostatically charged units that are radically different from charged units in conventional tetrahedrally coordinated molecular sieves. As in the case of classical zeolites, active sites represent cations counterbalancing the negative portion of the molecular sieve framework; however, these sites are weaker when induced by octahedral metal oxides than observed for tetrahedral aluminum in classical sieves. Members of the EXS family of sieves include, by way of example, ETS-4 (U. S. Patent 4,938,939), ETS-10 (U. S. Patent 4,853,202), and ETAS-10 (Ser. No. 529,021, filed May 25, 1990), all of which are titanium silicates or titanium aluminum silicates and the disclosure of which is incorporated herein by reference. These sieves exhibit isotherms indicating active but weaker binding of water than is inherent to the tetrahedral sites of classical zeolite and which may be manipulated and tailored for specific applications by means such as ion-exchange.

U. S. 4,853,202 discloses that ETS-10 sorbs water but is silent as to desorption temperatures (see col. 12, Example 11).

U. S. 4,938,939 also discloses that ETS-4 sorbs water but is silent as to desorption temperatures (see col. 12, Example 11).

### PREFERRED EMBODIMENTS OF THE INVENTION

EXS sieves used in the practice of this invention may be employed in the physical form amenable to the specific process in which they are used; they may be fine powders, shaped particles such as fluidizable microspheres, pellets, honeycombs, or in composites supported on substrates such as paper.

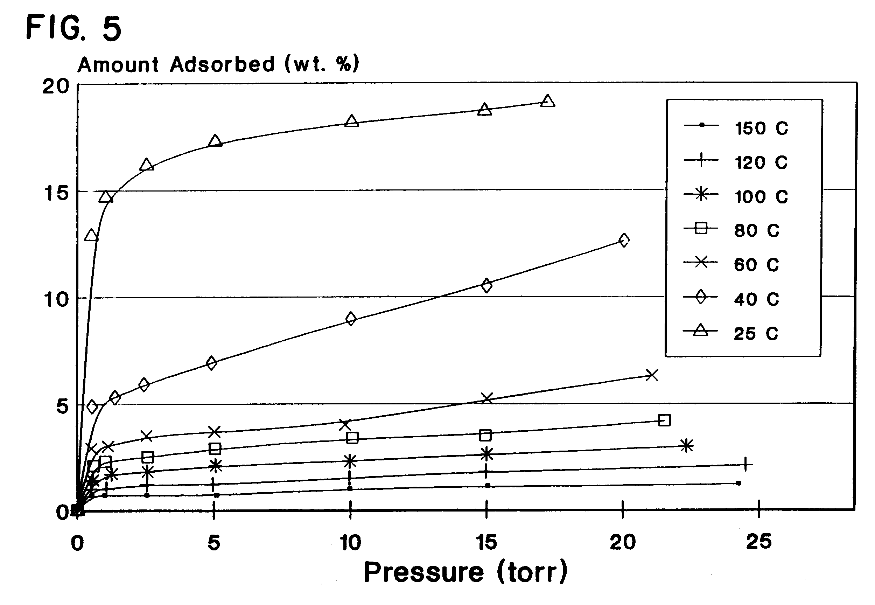

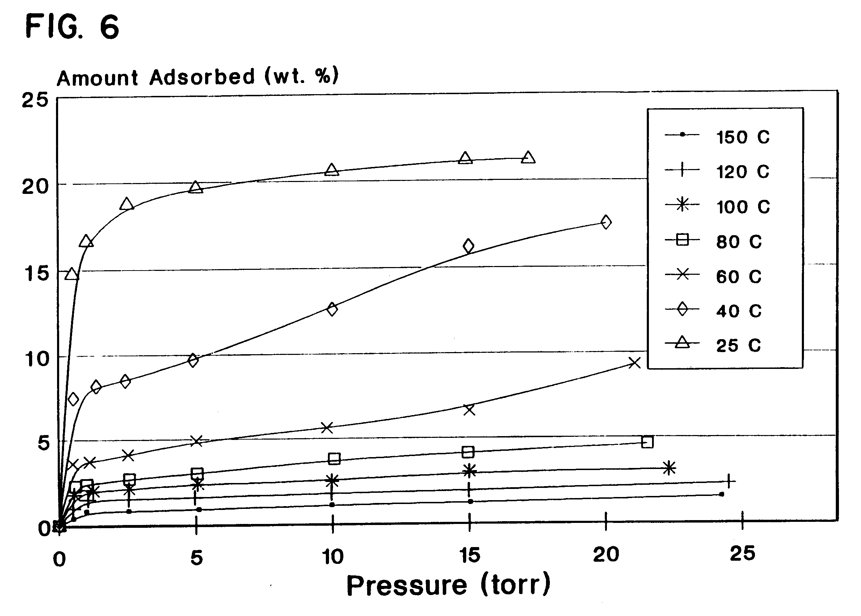

ETS-4, ETS-10 and ETAS-10, all titanium silicates except ETAS-10, which is a titanium aluminum silicate, are useful in the as-synthesized cationic form (generally mixed Na, K), or partially or fully exchanged with cations such as those shown in Figures 5 and 6. In a preferred embodiment, ETS-10 in the partially hydrogen-exchanged form is employed. In one especially preferred embodiment ETS-10 in the Ca/H exchanged form is employed. Natural analogues of these octahedrally coordinated synthetic sieves may be used if and when they become available. It is within the scope of the invention to use other molecular sieves in which the octahedrally coordinated charge site is present with metal atoms other than or in addition to titanium, as exemplified by niobium, cerium or zirconium as specified in U. S. Patent Application Ser. No. 07/527,624 (EP-A-0531364), the disclosure of which is incorporated by reference.

Octahedral coordination is readily ascertained by chemical analysis. For example, titanium in octahedral configuration induces a charge of minus two to a molecular sieve framework and two counterbalancing cationic charges must be present to maintain electrostatic neutrality. Conversely, titanium in tetrahedral coordination in a molecular sieve would not induce a charge requiring counterbalancing cations.

This invention is applicable to the following cyclic processes, all of which involve drying a gas at ambient or substantially ambient temperature and regenerating by purging with gas at ambient temperature or mildly elevated temperature, such as 50-100°C, as is desirable for desiccant cooling, adsorption heat transfer, drying and dehumidification as well as classical desiccant applications. The preferred sieve for use in any process will vary with particular demands of the processing. For example, in thermal swing drying cycles partially hydrogen exchanged ETS-10 behaves as a strong (zeolite-like) desiccant at ambient temperature and a weak (silica-like) desiccant at temperatures even lower than 100°C, whereby use of the partially hydrogen exchanged ETS-10 permits substantial reductions in the swing drying cycle temperature as contrasted with classical zeolite desiccants. Addition of calcium to partially hydrogen exchanged ETS-10 amplifies this effect, increasing the absolute swing capacity between ambient temperature and temperatures less than 100°C.

In illustrative examples, water adsorption isotherms for ETS-4, ETS-10 and ETAS-10 were obtained at ambient temperature (^{∼}25°C) and 100°C using a standard McBain-Bakr quartz spring adsorption balance. Additionally, samples of ETS-10 were both partially hydrogen exchanged and partially calcium exchanged to lower the concentration or strength of the active adsorption sites. These materials were subjected to more detailed adsorption analysis including obtaining incremental (with temperature) isotherms between ambient temperature and 150°C. Examination of the isotherm shapes at relatively low partial pressure of water (0-5 torr) were taken to be indicative of "active" zeolite-like binding and the ability to generate very dry gas at substantial desiccant water loading. It would be particularly easy and cost effective to employ ambient air as the stripping agent for a desiccant, especially if this can be accomplished with relatively mild heating. Ambient air (heated) is in fact the regenerant of choice for desiccant cooling and space conditioning adsorptive dehumidification. At 60% relative humidity, the partial pressure of water in ambient air is approximately 15 torr. In order to estimate the "efficiency" of a material for a low temperature regenerative desiccation cycle, the fraction of the desiccant's capacity at 5 torr and ambient temperature which could be removed by heating to 100°C at 15 torr was established. From the literature, it appears that all classical zeolites will swing significantly less than half their adsorbed water under such a low temperature regeneration. For example, common zeolite desiccants, such as X and A, will swing 20-30 percent of their adsorbed water under the conditions of such a low temperature cycle. All amorphous type materials of which we are aware uniformly demonstrate unacceptably low absolute water capacities (typically less than 7 weight percent) at the lower pressure temperature adsorption step.

However, during experimental testing, it was discovered that Zeolite X performed better than had been reported in the literature -- but not as well as the corresponding large-pored ETAS-10 or ETS-10.

The actual testing of Zeolite X will be shown in the Examples.

### EXAMPLE 1

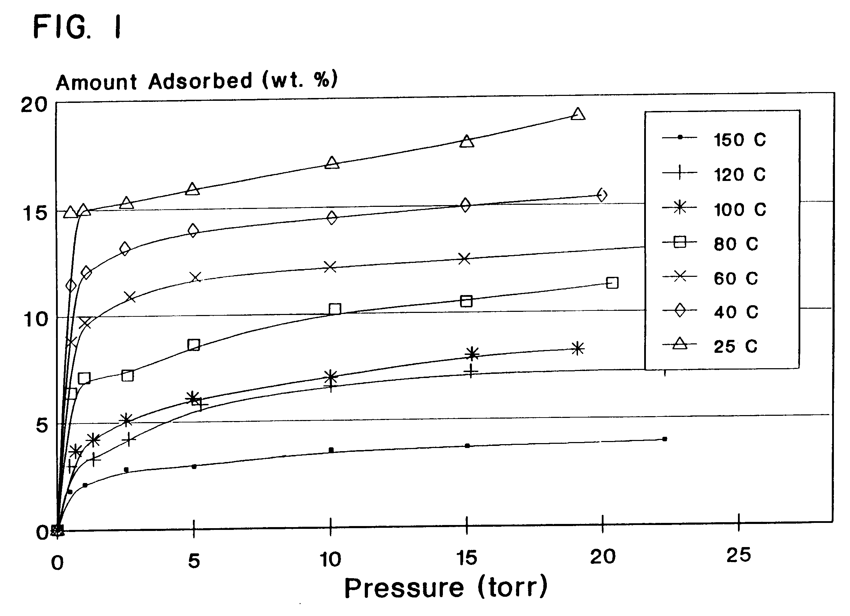

From the literature, it was surmised that among the three most common zeolite desiccants (Zeolites A, X and Chabazite) Chabazite possesses the lowest binding energy for water and thus would appear the most promising zeolite candidate for low temperature regenerative desiccant processes. Commercial, Union Carbide AW500 chabazite was activated at 250°C under vacuum and isotherms for water adsorption were obtained at various temperatures between ambient temperature and 150°C, using the McBain-Bakr adsorption balance system as depicted in Figure 1. The water capacity at 5 torr and ambient temperature was found to be ^{∼}15.5 wt.%. This declined to ^{∼}8.0 wt.% at 100°C and 15 torr. Thus ^{∼}7.5 wt.% or slightly less than half the 5 torr ambient temperature water capacity of the material can be cycled under these conditions. Isotherms were nearly rectangular and declined in a step-wise manner with temperature as would be expected from a classical desiccant.

### EXAMPLE 2

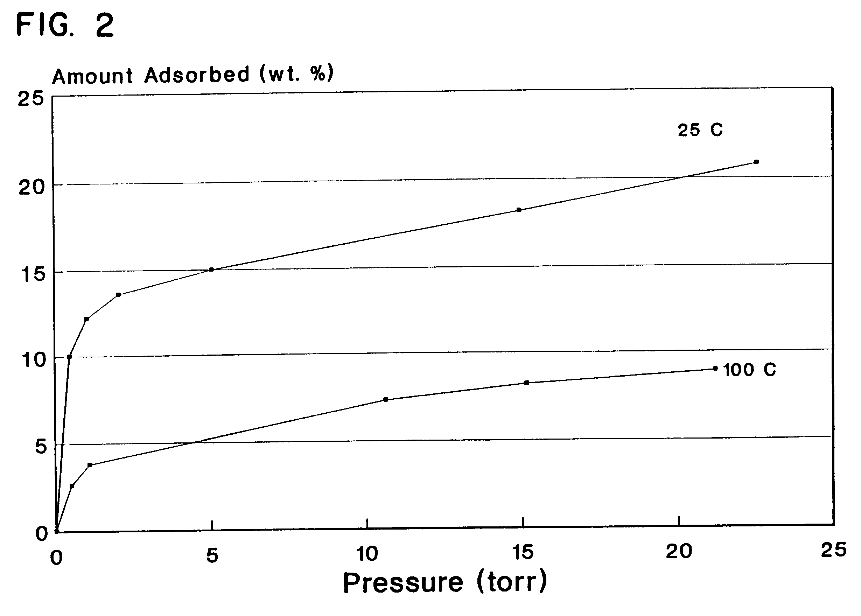

As synthesized ETS-4 was dried in ambient air at 200°C. A sample of this material was loaded into the McBain-Bakr microbalance system and activated under vacuum at 200°C. Water adsorption isotherms were collected at ambient temperature and 100°C as presented in Figure 2. The shape of the ambient temperature isotherm in the low pressure region (0-5 torr) was found to be Type I, but much less extreme than that seen for classical zeolite desiccants. The swing cycle between 5 torr, ambient temperature and 15 torr, 100°C was found to shift approximately 7.5 weight percent water or ∼50% of the 5 torr, ambient temperature loading. Such efficiency is higher than the most promising classical small-pored zeolite which we have been able to identify. The isotherm shape indicates the zeolite-like ability to generate extremely dry gas in any flow-through desiccation process, with somewhat easier regenerability than chabazite, the weakest currently commercial zeolite desiccant.

### EXAMPLE 3

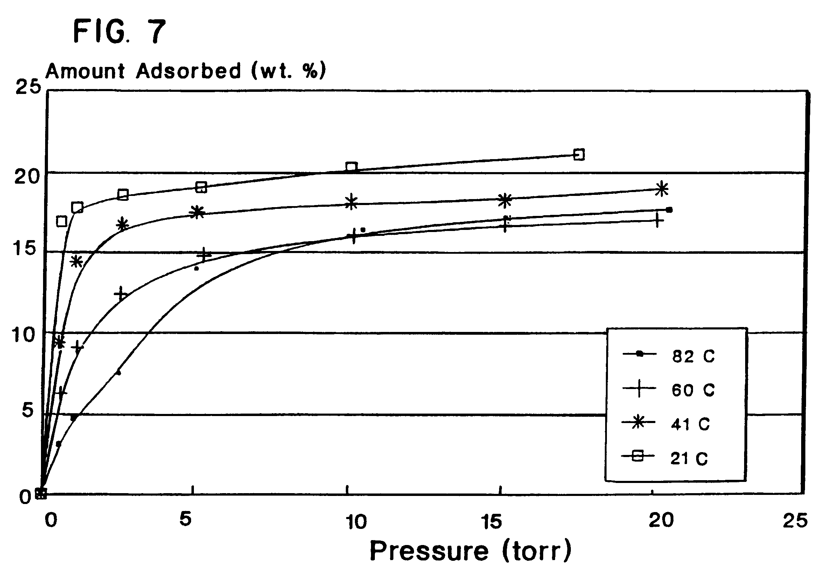

Commercially available Zeolite 4A (Davison) beads were crushed. A sample of this material was loaded into the McBain-Bakr microbalance system and activated under vacuum at 200°C. Water adsorption isotherms were collected at ambient temperature, 41°C, 60°C and 82°C, as presented in Figure 7. The shape of the ambient temperature isotherm in the low pressure region (0-5 torr) was found to be Type I. It was, however, significantly more "zeolitic" than the ETS-4 of the previous example. The water isotherm collapsed by 82°C much more rapidly than either the chabazite of Example 1 or the ETS-4 of Example 2. Thus, the swing cycle between 5 torr, ambient temperature (∼19 wt.%) and 15 torr, 82°C (∼17 wt.%) was found to shift approximately 2.0 weight percent water or ∼10 wt.% of the 5 torr, ambient temperature loading. Such low efficiency renders Zeolite 4A almost useless for these temperature swing applications, the weakest currently commercial zeolite desiccant.

This finding is in full accord with the reported literature.

### EXAMPLE 4

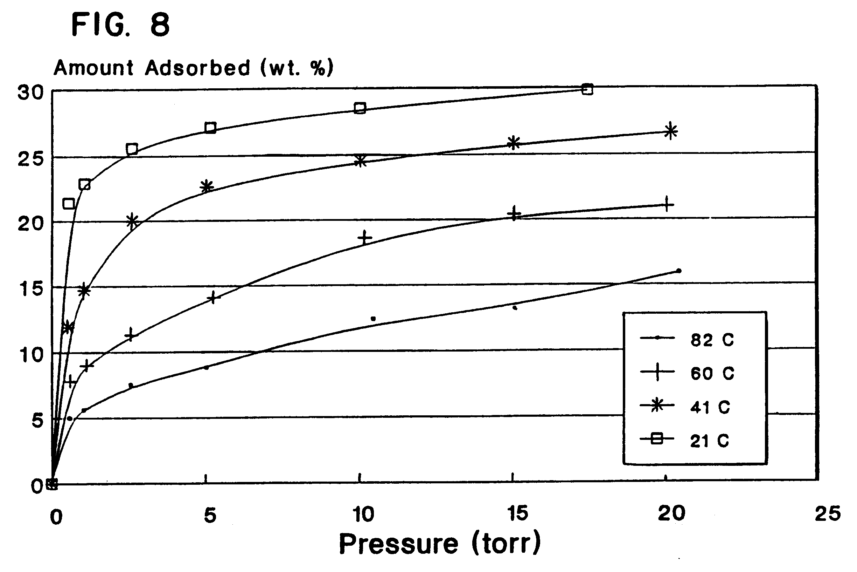

A sample of commercially available Zeolite 13X powder (Union Carbide corporation) was loaded into the McBain-Bakr microbalance system and activated under vacuum at 200°C. Water adsorption isotherms were collected at ambient temperature, 41°C, 60°C and 82°C, as presented in Figure 8. The shape of the ambient temperature isotherm in the low pressure region (0-5 torr) was found to be Type I. Thus, the swing cycle between 5 torr, ambient temperature (27 wt.%) and 15 torr, 82°C (13 wt.%) was found to shift approximately 14.0 weight percent water or ∼51 wt.% of the 5 torr, ambient temperature loading. Such efficiency is substantially higher than had been previously reported in the literature -- but not as high as the corresponding large-pored ETS-10 of Example 5.

### EXAMPLE 5

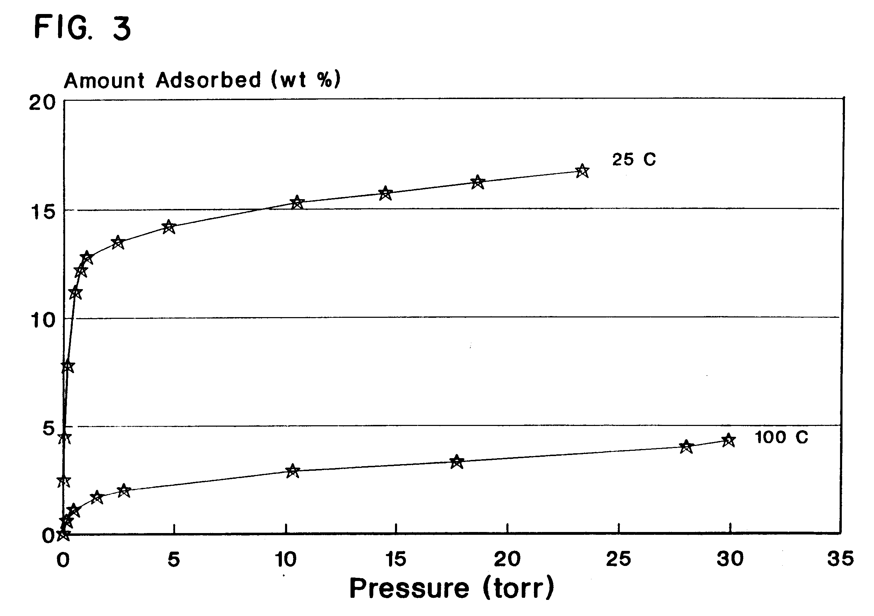

As synthesized ETS-10 was dried in ambient air at 350°C. A sample of this material was loaded into the McBain-Bakr microbalance system and activated under vacuum at 350°C. Water adsorption isotherms were collected at ambient temperature and 100°C as presented in Figure 3. The shape of the ambient temperature isotherm in the low pressure region (0-5 torr) was found to be Type I but, again, much less extreme than that seen for classical zeolite desiccants. It was, however, significantly more "zeolitic" than the ETS-4 of Example 2. The water isotherm collapsed by 100°C much more rapidly than either the chabazite of Example 1 or the ETS-4 of Example 2. Thus, the swing cycle between 5 torr, ambient temperature and 15 torr, 100°C was found to shift approximately 11 weight percent water or ∼80% of the 5 torr, ambient temperature loading. Such efficiency is substantially higher than the most promising classical zeolite which we have been able to identify. The isotherm shape indicates the zeolite-like ability to generate extremely dry gas in any flow-through desiccation process, with somewhat easier regenerability than chabazite, the weakest currently commercial zeolite desiccant. The more rapid collapse of the isotherm with temperature combined with the more zeolitic shape of the isotherm at low pressure and ambient temperature indicate greater efficiency in low temperature cyclic desiccant processes than the ETS-4 of Example 2 and much greater efficiency than the chabazite of Example 1.

### EXAMPLE 6

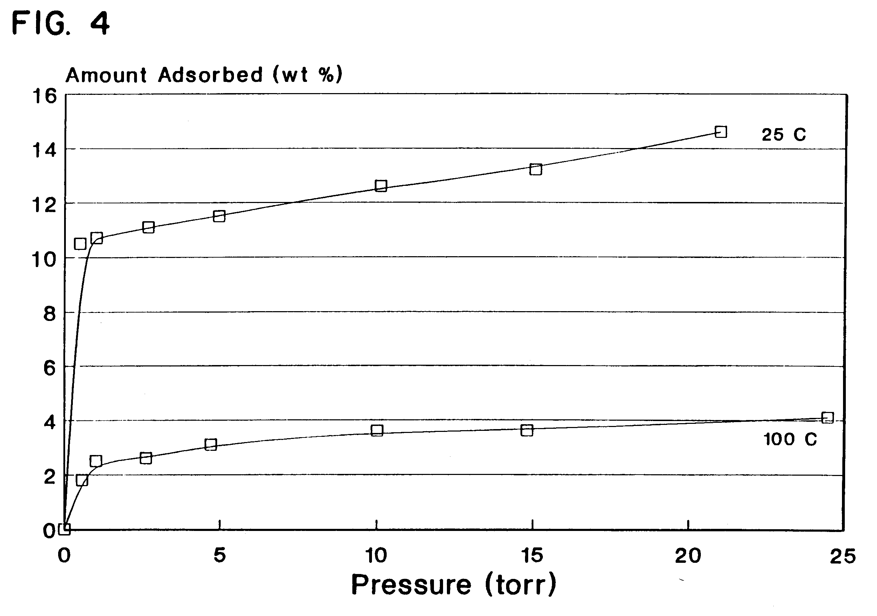

As synthesized ETAS-10 was dried in ambient air and a sample of this material was loaded into the McBain-Bakr microbalance system and activated under vacuum at 250°C. Water adsorption isotherms were collected at ambient temperature and 100°C as presented in Figure 4. The shape of the ambient temperature isotherm in the low pressure region (0-5 torr) was found to be Type I, but much less extreme than that seen for classical zeolite desiccants. The isotherm shape appeared intermediate between the ETS-4 and the ETS-10 of Examples 2 and 5, respectively. The swing cycle between 5 torr, ambient temperature and 15 torr, 100°C was found to shift approximately 8 weight percent water or ∼70% of the 5 torr, ambient temperature loading. Such efficiency is, again, higher than the most promising classical zeolite which we have been able to identify, although not as promising as the ETS-10 of Example 5.

### EXAMPLE 7

In order to facilitate hydrogen exchange, 10 grams of ETS-10 was slurried with 2 grams of concentrated HCl in 48 grams of deionized water at 50°C for one hour. This sample was filtered, washed and dried in air at 100°C. The sample was activated at 250°C under vacuum, and isotherms for water adsorption were obtained at various temperatures between ambient temperature and 150°C using the McBain-Bakr adsorption balance system as depicted in Figure 5. The water capacity at 5 torr and ambient temperature was found to be approximately 17.3 wt.%. This declined to approximately 2.6 wt.% at 100°C and 15 torr - approximately 14.7 wt.% or ∼85% of the 5 torr, ambient temperature loading. This represents a significant improvement in both quantitative amount of water cycled and higher efficiency than observed in the untreated ETS-10 of Example 5. However, examination of the isotherms of Figure 5 indicate that while zeolitic at ambient temperature, they have collapsed well before 100°C. In fact, a swing of 12.1 wt.% or ∼70% of the 5 torr, ambient temperature loading may be swung by heating the sample to 60°C and 15 torr; 60°C represents the hot exhaust available from a typical electric heat pump, an efficient source which heretofore has not been applied to cyclic desiccant processes because of the lack of appropriate desiccants.

### EXAMPLE 8

In order to further demonstrate the superiority of the zeolites containing octahedrally coordinated sites over classic zeolites such as Zeolites A and X, adsorption isotherms were collected as set forth in the previous examples but at different temperature ranges. In each case, the swing was determined between adsorption at 5 torr and desorption at 15 torr.

Zeolites A, X and ETS-10 were tested with the following results:

**TABLE**

| | Wt.% Water Adsorbed Ambient ∼20°C | Wt.% Water Remaining at 15 Torr | | |
|---|---|---|---|---|
| | | 40°C | 60°C | 82°C |
| A | 19.1 | 18.3 | 16.7 | 17.2 |
| X | 27.1 | 25.8 | 20.4 | 13.2 |
| ETS-10 | 17.3 | 10.5 | 5.2 | 3.5 |

| | | % Efficiency | | |
|---|---|---|---|---|
| | | ∼40°C | ∼60°C | ∼82°C |
| A | | 4.2 | 12.5 | 9.9 |
| X | | 4.8 | 24.7 | 51.3 |
| ETS-10 | | 39.3 | 69.9 | 79.8 |
| Efficiency - (Wt.% H₂O adsorbed at ambient temp - Wt.% H₂O remaining at 15 Torr at a particular temp) divided by wt.% H₂O adsorbed at ambient temperature. | | | | |

The above Table, together with the previous Examples, demonstrates the superiority of the claimed zeolites with regard to efficiency over the classic zeolites irrespective of pore size.

Thus, when comparing a small-pored zeolite of this invention ETS-4 with prior art zeolites, e.g., A and chabazite, a greater efficiency was obtained. The same is true for large-pored zeolites, e.g., Zeolite X versus ETS-10 or ETAS-10.

### SUMMARY AND CONCLUSIONS FOR EXAMPLES 1-8

All three molecular sieves containing octahedral active sites were found to have zeolite-like water isotherms at ambient temperature which collapse to a much greater extent by 100°C than chabazite, the classical zeolite which binds water less exothermally than other common zeolite desiccants. The least promosing material was ETS-4, which has the highest charge density of the tested octahedral-sited molecular sieves. Intermediate in efficiency was ETAS-10, which contains tetrahedral aluminum sites as well as octahedral titanium sites. While all tested materials appeared more promising for low temperature regenerative desiccant processes than chabazite or Zeolite A, the ETS-10 of Example 5 appeared singularly the most promising. Thus, ETS-10 was chosen to be modified by ion-exchange in order to magnify the observed effect.

### EXAMPLE 9

In order to facilitate calcium exchange, 10 grams of ETS-10 was slurried with 10 grams of CaCl₂·2H₂O in 100 ml of deionized water and adjusted to a pH of 6.0 with HCl and heated to 100°C. For completeness of exchange, this procedure was repeated for a total of two exchanges. This sample was filtered, washed and dried in air at 350°C. The sample was activated at 300°C under vacuum, and isotherms for water adsorption were obtained at various temperatures between ambient temperature and 150°C using the McBain-Bakr adsorption balance system as depicted in Figure 6. The water capacity at 5 torr and ambient temperature was found to be approximately 19.5 wt.%. This declined to approximately 3.0 wt.% at 100°C and 15 torr - approximately 16.5 wt.% or ∼85% of the 5 torr, ambient temperature loading. This represents an enhancement from the result of the previous example,
a further significant improvement over the amount of water cycled, and higher efficiency than observed in the untreated ETS-10 of Example 5. Again, examination of the isotherms of Figure 6 indicate that while zeolitic at ambient temperature, they have collapsed well before 100°C. In fact, a swing of 12.5 wt.% or ∼65% of the 5 torr, ambient temperature loading may be swung by heating the sample to 60°C and 15 torr; 60°C represents the hot exhaust available from a typical electric heat pump, an efficient source which heretofore has not been applied to cyclic desiccant processes because of the lack of appropriate desiccants.

### SUMMARY AND CONCLUSIONS OF EXAMPLES 8 AND 9

Examples 8 and 9 demonstrate that weakening or lowering the concentration of active sites in molecular sieves containing octahedral sites accentuates the tendency to behave as a zeolite desiccant, but to behave more as an amorphous-type desiccant with rising temperature. The temperature rise needed is so small as to potentially allow the employment of low temperature heat sources such as the output from electric heat pumps or low temperature waste heat sources to be employed in cyclic desiccant processes. Heretofore, this has been impossible owing to deficiencies in currently available desiccants.

### SUMMARY

In summary, the octahedral sites of EXS molecular sieves interact with water in such a manner as to generate unique desiccant properties. Their behavior resembles classical zeolites at ambient temperature and amorphous materials at temperatures less than 100°C, perhaps as low as 50°C in appropriately modified forms. This permits the low temperature regeneration associated with non-specific adsorbents such as silica gel with high adsorption capacity, even at low partial pressures of water as is noted for classical zeolites. No other such materials are known. The combination of "zeolite-like" active adsorption and "silica-like" ease of stripping has utility in any cyclic desiccant process. Such processes include classical adsorptive drying, pressure swing drying, climate control (dehumidification) and various adsorptive heat pump and desiccant cooling schemes.

Additionally, the EXS molecular sieves can be utilized to remove water from the air in a low humidity environment such as in a desert, thereby serving as water collecting devices. Thus, at cooler evening temperatures, the EXS molecular sieves will adsorb water from the air even at low partial pressures. However, when said zeolites are heated, such as by the action of the sun or by heaters, most of the adsorbed water vapor desorbs (condenses) even at relatively high vapor pressure. Quite obviously, the condensed water can be collected and reused.

## Claims

1. A cyclic process for drying gas wherein moisture is adsorbed from the gas at ambient temperature or substantially ambient temperature by contact with molecular sieve desiccant containing octahedrally coordinated active sites and is desorbed from the desiccant at 50 to 100°C.

2. A process according to claim 1 wherein said desorption takes place at 50 to 82°C.

3. A process according to claim 2 wherein said desorption takes place at 50 to 70°C.

4. A process according to any preceding claim wherein said sieve is selected from ETS-4, ETS-10, ETAS-10 and their chemically modified versions, and mixtures thereof.

5. A process according to any preceding claim which is a pressure swing drying process.

6. A dehumidification process according to any of claims 1 to 4.

7. A process according to any of claims 1 to 4 in which the molecular sieve desiccant is present in a heat pump.

8. A process according to any of claims 1 to 4, wherein said gas is air which contains relatively little moisture and said desorbed moisture is collected and used.

## Patentansprüche

1. Kreislaufverfahren zur Gastrocknung, bei dem die Feuchtigkeit aus dem Gas bei Umgebungstemperatur oder im wesentlichen Umgebungstemperatur durch Kontakt mit einem Molekalarsieb-Trockenmittel, welches oktaedrisch koordinierte aktive Stellen enthält, adsorbiert und aus dem Trockenmittel bei 50 bis 100 °C desorbiert wird.

2. Verfahren nach Anspruch 1, bei dem die Desorption bei 50 bis 82 °C stattfindet.

3. Verfahren nach Anspruch 2, bei dem die Desorption bei 50 bis 70 °C stattfindet.

4. Verfahren nach irgendeinem vorhergehenden Anspruch, bei dem das Sieb ausgewählt wird aus ETS-4, ETS-10, ETAS-10 und ihren chemisch modifizierten Versionen und aus Gemischen davon.

5. Verfahren nach irgendeinem vorhergehenden Anspruch, welches ein Druckschwankungstrockenverfahren ist.

6. Feuchtigkeitsentzugsverfahren nach irgendeinem der Ansprüche 1 bis 4.

7. Verfahren nach irgendeinem der Ansprüche 1 bis 4, bei dem das Molekularsieb-Trockenmittel in einer Wärmepumpe vorhanden ist.

8. Verfahren nach irgendeinem der Ansprüche 1 bis 4, bei dem das Gas Luft ist, welche relativ wenig Feuchtigkeit enthält, und die desorbierte Feuchtigkeit gesammelt und verwendet wird.

## Revendications

1. Procédé cyclique de séchage de gaz dans lequel l'humidité est adsorbée du gaz à température ambiante ou à température sensiblement ambiante par mise en contact avec un desséchant à tamis moléculaire contenant des sites actifs de coordination octaédrique et est désorbée du desséchant entre 50 et 100°C.

2. Procédé selon la revendication 1, dans lequel ladite désorption a lieu entre 50 et 82°C.

3. Procédé selon la revendication 2, dans lequel ladite désorption a lieu entre 50 et 70°C.

4. Procédé selon l'une quelconque des revendications précédentes, dans lequel ledit tamis est choisi parmi ETS-4, ETS-10, ETAS-10 et leurs versions modifiées chimiquement, et des mélanges de ceux-ci.

5. Procédé selon l'une quelconque des revendications précédentes, qui est un procédé de séchage à variation de pression.

6. Procédé de déshumidification selon l'une quelconque des revendications 1 à 4.

7. Procédé selon l'une quelconque des revendications 1 à 4, dans lequel le desséchant à tamis moléculaire est présent dans une pompe à chaleur.

8. Procédé selon l'une quelconque des revendications 1 à 4, dans lequel ledit gaz est de l'air contenant relativement peu d'humidité et ladite humidité désorbée est recueillie et utilisée.
